(19) Europäisches Patentamt
European Patent Office
Office européen des brevets

(11) EP 1 164 583 A2

(12) # EUROPEAN PATENT APPLICATION

(43) Date of publication:
**19.12.2001 Bulletin 2001/51**

(51) Int Cl.7: **G11B 7/135**, G02B 13/18

(21) Application number: **01114011.8**

(22) Date of filing: **08.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.06.2000 JP 2000175230**

(71) Applicant: **Pioneer Corporation**
**Meguro-ku, Tokyo (JP)**

(72) Inventors:
- **Kikuchi, Ikuya, c/o Pioneer Corporation**
  **Tsurugashima-shi, Saitama 350-2288 (JP)**
- **Koike, Katsuhiro, c/o Pioneer Corporation**
  **Tsurugashima-shi, Saitama 350-2288 (JP)**
- **Sato, Makoto, c/o Pioneer Corporation**
  **Tsurugashima-shi, Saitama 350-2288 (JP)**
- **Maeda, Takanori, c/o Pioneer Corporation**
  **Tsurugashima-shi, Saitama 350-2288 (JP)**

(74) Representative: **Goddar, Heinz J., Dr.**
**FORRESTER & BOEHMERT Pettenkoferstrasse 20-22**
**80336 München (DE)**

(54) **Complex objective lens and method for manufacturing the same and optical pickup device and optical recording / reproducing apparatus**

(57) A complex objective lens includes a first optical element having a first surface including a convex aspherical surface shape and an opposite side surface opposing to the first surface; and a second optical element having an exit surface through which an optical beam passing and an entry surface opposing to the exit surface. The opposite side surface opposing to the first surface of the first optical element and the entry surface opposing to the exit surface of the second optical element are directly contacted to each other.

FIG. 2

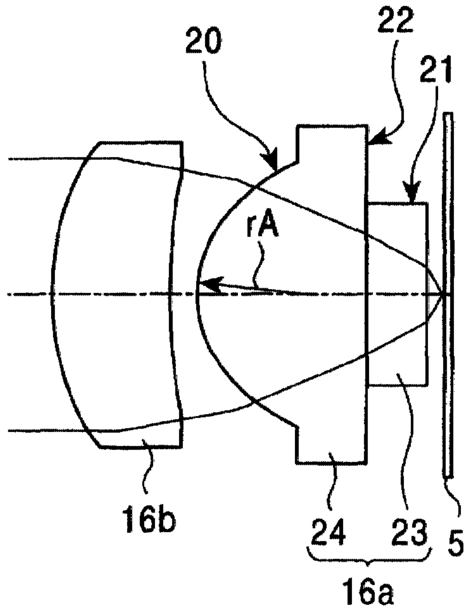


EP 1 164 583 A2

## Description

### BACKGROUND OF THE INVENTION

1. Field of the invention

The present invention relates to an optical system of an optical pickup of an optical recording/reproducing apparatus for recording/reproducing information to/from an optical information recording medium such as an optical disc and an optical card and, particularly relates to an objective lens of the optical system used therein.

2. Description of the related art

Optical discs such as a DVD (Digital Versatile Disc) are known as an optical information recording medium. A study of a high density DVD (HD-DVD) system is also in progress in order to increase the capacity of an optical disc. For the purpose of increasing density and capacity of information signals in such optical disc for writing and reading data, research and development is in progress for an optical pickup device and an information recording/reproducing apparatus with high performance.

An optical beam with a short wavelength is under consideration for use for an optical pickup so as to correspond to a high density of the optical information recording medium, and the numerical aperture (NA) of an objective lens is increased so that a diameter of the illumination spot will be decreased. In a recording system using the HD-DVD, condensing power is dispersed by using a so-called two-group-set lens, that is, at least two condenser lenses, whose optical axes correspond to each other, for an objective lens, which would have a large numerical aperture such as 0.85, for example, so that a good characteristic of image height can be obtained (Japanese Laid-Open Patent Application No. Hei 10-255303).

For example, a conventional objective lens consisting of the two-group-set lens comprises a first lens into which parallel light enters from a side of a light source, and a second lens through which a luminous flux from the first lens transmits and exits for focusing on a recording surface of an optical disc. In the case of arranging an objective lens so that it would be divided into two lenses, the first and second lenses on the incident and exiting sides, it is necessary to provide precise alignment of the two condenser lenses. The alignment precision is required to be a micrometer or less, for example, at an axis of lens meridian or center axis in rotation. For achieving such precision, adjustment for alignment is necessary individually in assembling the two lenses. Thus, the objective lens comprising two lenses would cost more, because a process for adjusting the lenses is complicated in that assembly of the lenses is performed while the adjustment is performed by observing the condition of the lens stop on light passing therethrough.

In manufacturing an objective lens of an optical system for an optical pickup, a glass molding method, in which a glass ball is spherically preformed by a precision glass press, that is, a preformed glass ball is formed into an aspherical shape, is adopted instead of a polishing method in which a block made of a glass material is polished until it becomes a spherical surface, and then, formed into an aspherical shape. In molding a glass into an aspherical lens, a first process of an optical glass, which is a so-called preforming process, is carried out in advance so that a preformed ball would be obtained, and then, the preformed ball undergoes precision press molding. It is required that the spherical shape have excellent stability and easiness of reproduction in molding and that particularly a glass lens with a small diameter is made from the preformed ball.

Allotting much more light condensing power to the second lens on the exiting side in a two-group-set lens allows a tolerance of center axis of the objective lens, comprising two lenses, to be large, so that the alignment precision can be relaxed. Especially when the two-group-set lens, in which the second lens on the exiting side is thick, is used for an optical disc having a thin light transmission layer illuminated by light, it can provide a good characteristic. A thick lens should be used for the second lens in order to allot much more light condensing power to the second lens.

However, it is difficult to produce the thick second lens by glass press molding. That is, a preformed ball made of glass is put in a metal mold to be pressed to produce a thick lens by the glass press, so that a gap would appear between the ball and the metal mold. This means that a lens having a small center radius of curvature cannot be made very thick.

It is necessary that the volumes of the press-molded lens and the preformed ball are substantially equal to each other to obtain a high precise thin glass lens by the press-molding. In other words, the diameter of the preformed ball Rf should be smaller than the curvature radius R of the metal mold for a glass lens to be press-molded ($Rf<R$). This is because air existing between the inner surface of the metal mold and the preformed ball is not taken out perfectly during the press-molding if the curvature radius R of the metal mold is smaller than the diameter of the preformed ball Rf, so that an inferior molding occurs.

Actual alignment precision of the second lens is determined in accordance with a mechanical absolute dimension, while an allowable amount of precision in alignment of a lens increases almost proportional to an effective diameter thereof. Thus, an effective diameter of the second lens can be made large so that the alignment precision can be allowable. In such structure of a lens, however, the optical pickup would be large, which causes difficulty for an optical spot to follow a track of a recording medium such as an optical disc moving at a high speed.

According to the reasons mentioned above, in obtaining an objective lens comprising two lenses having a high numerical aperture, it is difficult to produce a stable glass pressed lens, which does not require adjustment of alignment of the two lenses and which has a small diameter and shape. In order to assemble the foregoing objective lens, it is necessary to perform location adjustment of one lens in two axes or to perform alignment adjustment by rotating an eccentric lens. Otherwise, the image height would be insufficient when the alignment precision is relaxed, so that practical performance cannot be obtained.

The objective lens comprising two lenses having a high numerical aperture has little tolerance for lens thickness. Especially, the amount of tolerance of the second lens thickness is required to be severe, on the order of a micrometer. This creates a difficult condition for performing a glass pressing step. In addition, there is a problem that the maximum number of lenses formed by one metal mold is small since a metal mold is apt to be worn away over the tolerance range. Thus, there is a problem in using the foregoing objective lens for an optical disc device to be mass-produced.

Accordingly, the volume of the second lens is limited by the limitation that the diameter of the preformed ball should not be larger than the center curvature radius of a light incident side surface of the second lens, so that a thick glass lens with a large light condensing power cannot be provided. Therefore, there is no other way but to arrange the objective lens set so that the light condensing power is allotted to the first lens. As a result, the objective lens must be designed under an insufficient condition of tolerance in a lens interval between the first and second lenses, so that assembly of the objective lens cannot be performed without adjustment.

## OBJECT AND SUMMARY OF THE INVENTION

An object of the present invention is, in view of the foregoing problems, to provide an aspherical lens in a shape that can obtain an objective lens having a high numerical aperture, the objective lens being in a shape capable of substantial non-adjustment assembly.

A objective lens according to the invention is a complex objective lens comprising:

> a first optical element having a first surface including a convex aspherical surface shape and an opposite side surface opposing to the first surface; and
> a second optical element having an exit surface through which an optical beam passing and an entry surface opposing to the exit surface,
> wherein the opposite side surface opposing to the first surface of the first optical element and the entry surface opposing to the exit surface of the second optical element are directly contacted to each other.

In one aspect of the complex objective lens according to the invention, the first optical element has a refractive index larger than the refractive index of the second optical element.

In another aspect of the complex objective lens according to the invention, the objective lens further comprises an intermediate directly interposed on and between the opposite side surface opposing to the first surface of the first optical element and the entry surface opposing to the exit surface of the second optical element to connect the first and second optical elements.

In a further aspect of the complex objective lens according to the invention, the intermediate film has a refractive index larger than the refractive index of the second optical element and the first optical element has a refractive index larger than the refractive index of the intermediate film.

In a still further aspect of the complex objective lens according to the invention, the convex aspherical surface shape of said first optical element includes a center curvature radius in a range of length equal to and larger than a radius of a ball having the same volume as a volume of the first optical element and smaller than a radius of a ball having the same volume as a total volume of the first and second optical elements.

In another aspect of the complex objective lens according to the invention, a center curvature radius rA of said the convex aspherical surface shape of the first optical element satisfies a formula below:

$$\sqrt[3]{\frac{3}{4\pi}V1} \le rA < \sqrt[3]{\frac{3}{4\pi}(V1+V2)} \qquad (1)$$

wherein V1 denotes a volume of the first optical element, and V2 denotes a volume of the second optical element.

In a further aspect of the complex objective lens according to the invention, the first and second optical element are made of a glass material, the opposite side surface opposing to the first surface of the first optical element and the entry surface opposing to the exit surface of the second optical element are formed by being contacted and abraded to make close adherence to one another.

An optical pickup according to the invention is characterized by comprising the complex objective lens mentioned above.

An optical recording/reproducing apparatus according to the invention is characterized by comprising the optical pickup device mentioned above.

A method for manufacturing a complex objective lens having a convex aspherical surface shape according to the invention, comprises the steps of:

providing a first optical element having a first surface including a convex aspherical surface shape and an opposite side surface opposing to the first surface, and a second optical element having an exit surface through which an optical beam passing and an entry surface opposing to the exit surface;
directly contacting and abrading said first and second optical element at the opposite side surface opposing to the first surface of the first optical element and the entry surface opposing to the exit surface of the second optical element; and
applying said second optical element to the first optical element.

In one aspect of the method according to the invention, the method further comprises a step of monitoring a thicknesses of the first and second optical elements in the abrading step to stop to abrade the first and second optical elements at a time that a predetermined optical thickness is obtained.

In another aspect of the method according to the invention, the method further comprises a step of providing an intermediate film between the opposite side surface opposing to the first surface of the first optical element and the entry surface opposing to the exit surface of the second optical element, after the abrading step.

## BRIEF DESCRIPTION OF THE DRAWINGS

Fig. 1 is a schematic structural view showing the inside of an optical pickup according to the invention;
Fig. 2 is a partially sectional view showing an integral part of an objective lens unit of an optical pickup in an embodiment according to the invention;
Fig. 3 is a partially sectional view showing an objective lens unit in an optical pickup according to the invention;
Fig. 4 is a partially sectional view of an integral part of an objective lens unit of an optical pickup in another embodiment of the invention;
Fig. 5 is a graph illustrating a change in wave front aberration with respect to the tolerance in a lens interval between the first and second lenses of an objective lens unit of an optical pickup in an embodiment according to the invention;
Fig. 6 is a graph illustrating a change in wave front aberration with respect to the eccentric distance of lens of an objective lens unit of an optical pickup in the embodiment according to the invention;
Fig. 7 is a partially sectional view showing an integral part of an objective lens unit of an optical pickup as a comparison example.
Fig. 8 is a graph illustrating a change in wave front aberration with respect to the tolerance in a lens interval between the first and second lenses of an objective lens unit of an optical pickup as a comparative example;
Fig. 9 is a graph illustrating a change in wave front aberration with respect to the eccentric distance of lens of the comparative objective lens unit of an optical pickup;
Fig. 10 is a graph illustrating a change in wave front aberration with respect to the tolerance in a lens interval between the first and second lenses of an objective lens unit of an optical pickup in another embodiment according to the invention; and
Fig. 11 is a graph illustrating a change in wave front aberration with respect to the eccentric distance of lens of an objective lens unit of an optical pickup in the embodiment according to the invention.

## DETAILED DESCRIPTION OF THE PREFERRED EMBODIMENTS

Embodiments of the invention will be described hereinafter on the basis of the attached drawings.

<Optical pickup>

Fig. 1 shows a summary of an optical recording/reproducing apparatus provided with an optical pickup device in a first embodiment. The optical pickup is provided with a semiconductor laser LD1 for emitting blue light having a short wavelength in 400 nm to 410 nm, preferably around 405 nm.

The optical pickup comprises a polarizing beam splitter 13, a collimator lens 14, a quarter wavelength plate 15 and a unit 16 of the objective lens consisting of the two-group-set lens. In the forgoing light illuminating optical system, a laser beam from the semiconductor laser LD1 passes through the polarizing beam splitter 13 to be formed into a parallel light beam by the collimator lens 14, is transmitted through the quarter wavelength plate 15 to be condensed by the objective lens unit 16 toward an optical disc 5 disposed near a focal point of the objective lens unit 16, and forms an optical spot in a pit line on an information recording surface of the optical disc 5.

In addition to the forgoing light illuminating optical system, the optical pickup further includes a light detecting optical system such as a detecting lens 17. The objective lens unit 16, the quarter wavelength plate 15 and the polarizing beam splitter 13 are also used in the light detecting optical system. The objective lens unit 16 condenses light reflected at the optical disc 5 so that the polarizing beam splitter 13 would direct the reflected light having passed through the quarter wavelength plate 15 toward a condenser lens 17 for detection. The luminous flux condensed by the detecting lens 17 passes through an astigmatism causing element (not shown) such as a cylindrical lens or multiple lens, for example, to form an optical spot near the center of a light receiving surface 19 of an optical detector.

The light receiving surface 19 of an optical detector is connected to a demodulating circuit 30 and an error detecting circuit 31. The error detecting circuit 31 is connected to a driving circuit 33, which drives a mechanism including an actuator 26 for controlling tracking and focusing of the objective lens unit.

The optical detector supplies the demodulating circuit 30 and the error detecting circuit 31 with an electric signal in accordance with an optical spot image formed near the center of the light receiving surface 19 thereof. The demodulating circuit 30 generates a recording signal on the basis of the electric signal. The error detecting circuit 31 generates a focusing error signal, a tracking error signal, and other servo signals on the basis of the electric signal to supply each actuator with each driving signal through the driving circuit 33 of the actuator, so that the actuator can servo control and drive the objective lens unit 16 in accordance with each driving signal.

As shown in Fig. 1, in the optical pickup according to the invention, the objective lens consisting of the two-group-set lens unit 16 is an assembled body of a combination objective lens formed by combining a condenser lens (second lens) 16a with a first lens 16b. The condenser lens 16a condenses a light beam onto a recording surface of an optical disc. The first lens 16b is a condenser lens disposed at a light source side. The condenser lens 16a and the first lens 16b are coaxially disposed in an optical axis by a holder 16c.

<First embodiment>

The second lens 16a shown in Fig. 2 is a complex objective lens of first embodiment. The complex objective lens 16a has a first surface or aspherical surface 20 at the light source side (incident side) and a flat surface 21 at the optical disc side. The complex objective lens 16a consists of a parallel flat portion 23 or second optical element and an aspherical surface portion 24 or first optical element as shown in Fig. 2. The aspherical surface portion 24 is defined by the first surface or aspherical surface 20 at the light source side and a flat surface 22 disposed on the opposite side of the first surface. The parallel flat portion 23 is directly contacted and combined with the aspherical surface portion 24 on the flat surface 22 thereof, in which the parallel flat portion 23 and the aspherical surface portion 24 are individually manufactured previously. In this way, the complex objective lens 16a consists of: the first optical element 24 having the convex aspherical surface 20 through which a light beam enters and the flat face 22 on the side opposite to the first surface; and the second optical element 23 having the exit flat surface 21 through which the light beam exiting and the flat face opposite and parallel to the exit flat surface, in a such a manner that the first and second optical element 24 and 23 are directly contacted with each other on the opposite side surfaces to the first surface and the exit surface. To keep in contact of the parallel flat portion 23 and the aspherical surface portion 24, as shown in Fig. 3, the parallel flat portion 23 and the aspherical surface portion 24.

Additionally, in the manufacture of the complex objective lens, those flat surfaces of the first and second optical element 24 and 23 are contacted and abraded to make close adherence to one another. Further, it is effective to, while monitoring the thicknesses of the optical elements in the abrading process, stop to abrade the optical elements at the time that a predetermined optical thickness is obtained, since a proper thickness adjustment is achieved even if a deviation of the aspherical surface portion occurs due to the abrasion of the metal mold.

The aspherical surface portion or first optical element 24 with the first surface may be formed from a preformed glass ball having a radius smaller than the center curvature radius of the convex aspherical surface 20 under the conditions that the center curvature radius rA of the convex aspherical surface 20 is selected from the range of length equal to and larger than the radius of a ball having the same volume as the volume of the aspherical surface portion 24 and smaller than the radius of a ball having the same volume as the total volume of the first and second optical elements 24 and 23. In another words, the complex objective lens is manufactured such that the center curvature radius rA of the convex aspherical surface or first surface of the first optical element is required to satisfy the following formula:

$$\sqrt[3]{\frac{3}{4\pi}V1} \le rA < \sqrt[3]{\frac{3}{4\pi}(V1+V2)} \qquad (1)$$

wherein V1 denotes the volume of the first optical element, and V2 denotes the volume of the second optical element.

The left side of formula (1) is determined by the conditions that the preformed glass ball has a radius larger than the radius of a ball having the same volume as the volume of the aspherical surface portion 24. The right side of formula (1) is determined by the volume conditions that, by using a preformed glass ball having a volume smaller than the volume of the convention objective lens consisting of a lens group set including the flat portion, separate two pieces parts can be individually formed so as to make a complex objective lens without adjustment.

<Second embodiment>

In addition to the features of the first embodiment, the materials of the parallel flat portion 23 or second optical element and an aspherical surface portion 24 or first optical element are selected so that the refractive index of the aspherical surface portion is larger than that of the parallel flat portion, in the second embodiment. Such a material selection enables to increase a tolerance of axis deviation of the first and second optical elements form the center optical axis, since a luminous flux entering through the aspherical surface portion to the parallel flat portion is refracted so as to converge into a point. As a result, the aspherical surface portion does not have to provide a large power of converging light.

<Third embodiment>

The third embodiment of the complex objective lens is similar to the first embodiment composed of the parallel flat portion and the aspherical surface portion except an intermediate film disposed therebetween. This intermediate film is an adhesive layer such as an ultraviolet curing resin for combining securely those two pieces. Moreover, the intermediate film may be formed from a multi-layer made of dielectrics to prevent from an necessary reflection at the interface. The third embodiment enables to compose the complex objective lens of two pieces without lens-barrel and to reduce stray light at the border interface due to the reflection. As shown in Fig. 4, the complex objective lens (the second lens) 16a consists of a parallel flat portion 43 or second optical element, an aspherical surface portion 44 or first optical element, and an intermediate film 45 interposed therebetween. The aspherical surface 40 at a light source side is opposite to an exit flat surface 41 at an optical disc side. The parallel flat portion 43 and the aspherical surface portion 44 are individually formed and adhered to each other at the flat face 42 via the intermediate film 45.

<Fourth embodiment >

In addition to the features of the third embodiment, the materials of the aspherical surface portion 44, the intermediate film 45 and the parallel flat portion 43 are selected so that the refractive indexes of the portions 44, 45 and 43 increases in this order, in the fourth embodiment. Such a material selection enables to increase a tolerance of axis deviation of the first and second optical elements form the center optical axis, since a luminous flux entering through the aspherical surface portion to the parallel flat portion is refracted so as to converge into a point. As a result, the aspherical surface portion does not have to provide a large power of converging light.

<First example>

A complex objective lens of first example according to the invention will be described concretely. The wavelength of the light source used is 430 nm. The volume of the preformed glass ball is 11.5 $mm^3$. The diameter of preformed ball is 1.4 mm. The paraxial curvature radius of the aspherical surface glass lens is 1.44 mm. A shape of the aspherical surface Z of the objective lens is determined by the following formula:

$$Z = \frac{\left(\frac{r^2}{R}\right)}{1+\sqrt{1-(cc+1)\left(\frac{r}{R}\right)^2}} + A4r^4 + A6r^6 + A8r^8 + A10r^{10} + A12r^{12}$$

wherein, r denotes a distance from the optical axis, Z denotes a distance between a point on an aspherical surface away from the distance r from the optical axis and a contact plane which is perpendicular to the optical axis and passes through an top point of the aspherical surface, R denotes a close axis curvature radius of the aspherical surface, CC denotes a cone coefficient, and A4, A6, A8, A10 and A12 denote respective aspherical coefficients of the fourth, sixth, eighth, tenth and twelfth degrees.

The following Tables 1 and 2 show data of respective aspherical lenses of the forgoing objective lens which are automatically designed with a computer.

Table 1

| Surface Number | Curvature Radius | Surface Interval | Refractive Index | Medium |
|---|---|---|---|---|
| 1 | 3.36715 | 1.20000 | 1.50497 | FCD1 |
| 2 | 11.89681 | 0.20000 | 1.00000 | Air |
| 3 | 1.44327 | 1.70000 | 1.76334 | M-NBF1 |
| 4 | 0.00000 | 0.60000 | 1.76334 | M-NBF1 |
| 5 | 0.00000 | 0.14870 | 1.00000 | Air |
| 6 | 0.00000 | 0.10000 | 1.61169 | carbo |

Table 2

| | | First Surface | Second Surface | Third Surface |
|---|---|---|---|---|
| Cone Coefficient | CC | -4.01809E-01 | -1.20441E+01 | -7.47256E-01 |
| Aspherical Coefficient | A4 | 1.14010E-03 | 9.98225E-04 | 2.15649E-02 |
| | A6 | -1.16805E-03 | 2.26861E-04 | 9.90298E-03 |
| | A8 | 5.38134E-04 | -5.58739E-04 | -5.70829E-03 |
| | A10 | -1.26049E-04 | 3.28266E-04 | 4.99603E-03 |
| | A12 | 1.48052E-06 | -7.12834E-05 | -1.48783E-03 |

Fig. 5 illustrates a variation in wave front aberration of the objective lens unit with respect to the tolerance in the lens interval between the first and second lenses. The figure shows a dependence with the horizontal axis representing the lens interval tolerance and the vertical axis representing the quantity of wave front aberration (rms (λ)) on the optical axis. As shown in this figure, the wave front aberration of the objective lens unit is limited to about the Marechal's condition 0.07 λ in a range of lens interval tolerance of ±0.1 mm.

Fig. 6 shows a change in wave front aberration of the objective lens unit with respect to the eccentric distance of lens. Fig. 6 shows a dependence with the horizontal axis representing the distance between both the optical axes the first and second lenses (mm), and the vertical axis representing the quantity of wave front aberration (rms (λ)). As shown in this figure, the wave front aberration of the objective lens unit is limited far below the Marechal's condition 0.07 λ, about 0.01 λ in a range of lens eccentric distance of about 0.05 mm.

Further, a comparative example of an objective lens consisting of the two-group-set lens having the conventional high numerical aperture shown in Fig. 7 will be described below for comparison. In Fig. 7, numeral 11 denotes a first lens into which parallel light, for example, enters from a light source side, and numeral 12 denotes a second lens from which the luminous flux having passed through the first lens exits to pass through a predetermined thickness of a transmission layer of an optical disc 5 so as to focus on a recording surface. The volume of a preformed ball to be used is 13.0 $mm^3$, the diameter of the preformed ball is 1.46 mm, and the close axis curvature radius is 1.50 mm. The wavelength of a light source used here is same as that of the forgoing embodiment.

The following Tables 3 and 4 show data of respective aspherical lenses of a comparative objective lens which are automatically designed with a computer.

Table 3

| Surface Number | Curvature Radius | Surface Interva | Refractive Index | Medium |
|---|---|---|---|---|
| 1 | 1.74896 | 1.50000 | 1.50497 | FCD1 |
| 2 | 6.02660 | 0.20000 | 1.00000 | Air |
| 3 | 1.50487 | 1.70000 | 1.76334 | M-NBF1 |
| 4 | 0.00000 | 0.14895 | 1.00000 | Air |
| 5 | 0.00000 | 0.10000 | 1.61169 | carbo |

Table 4

| | | First Surface | Second Surface | Third Surface |
|---|---|---|---|---|
| Cone Coefficient | CC | 6.97408E-01 | 7.32761E-08 | -2.13938E-01 |
| Aspherical Coefficient | A4 | 1.12304E-03 | -4.02404E-03 | 1.10512E-02 |
| | A6 | 4.52094E-03 | 2.70678E-03 | -2.28497E-02 |
| | A8 | -3.88072E-03 | -3.38048E-03 | -3.99552E-02 |
| | A10 | 1.55528E-03 | 1.77530E-03 | -3.44671E-02 |
| | A12 | -2.60168E-04 | -3.66095E-04 | 9.19274E-03 |

Fig. 8 illustrates a variation in wave front aberration of the comparative objective lens unit with respect to the tolerance in the lens interval between the first and second lenses. The figure shows a dependence with the horizontal axis representing the lens interval tolerance and the vertical axis representing the quantity of wave front aberration (rms ($\lambda$)) on the optical axis. As seen from Fig. 8, the comparative objective lens unit has a narrower range of the tolerance in a lens interval between the first and second lenses limited under about the Marechal's condition 0.07 $\lambda$ than that of the embodiment mentioned above.

Fig. 9 shows a change in wave front aberration of the objective lens unit with respect to the eccentric distance of lens. Fig. 6 shows a dependence with the horizontal axis representing the distance between both the optical axes the first and second lenses (mm), and the vertical axis representing the quantity of wave front aberration (rms ($\lambda$)). As shown in this figure, the comparative objective lens unit has a characteristic curve indicating a higher quantity of wave front aberration at the point about 0.05 mm of eccentric distance than that of the embodiment mentioned above.

Thus, the diameter of the preformed ball for the second lens volume including the flat portion can be miniaturized in comparison with the paraxial curvature radius of the aspherical surface in accordance with the invention. As a result, while basic performance of lens such as an image height and the like is maintained, the allowable amount of center positions of the first lens and the second lens can be widen to facilitate the design for the glass lens. Furthermore, tolerance in a lens interval between the first and second lenses can be also broaden.

<Second example>

A complex objective lens of second example according to the invention will be described concretely. The wavelength of the light source used is 430 nm. The volume of the preformed glass ball is 11.0 $mm^3$. The diameter of preformed ball is 1.38 mm. The paraxial curvature radius of the aspherical surface glass lens is 1.42 mm. The second lens volume including the flat portion is 16.5 $mm^3$. The diameter of preformed ball for the second lens volume including the flat portion is 1.58 mm. The aspherical surface shape in the second example is the same as that of the first example.

The following Tables 5 and 6 show data of respective aspherical lenses of the forgoing objective lens which are automatically designed with a computer.

Table 5

| Surface Number | Curvature Radius | Surface Interval | Refractive Index | Medium |
|---|---|---|---|---|
| 1 | 4.38693 | 1.20000 | 1.50497 | FCD1 |
| 2 | 15.85658 | 0.20000 | 1.00000 | Air |
| 3 | 1.41642 | 1.70000 | 1.76334 | M-NBF1 |
| 4 | 0.00000 | 0.60000 | 1.50497 | FCD1 |
| 5 | 0.00000 | 0.14870 | 1.00000 | Air |
| 6 | 0.00000 | 0.10000 | 1.61169 | carbo |

Table 6

| | | First Surface | Second Surface | Third Surface |
|---|---|---|---|---|
| Cone Coefficient | CC | -6.81893E-01 | -1.05401E-03 | -7.56970E-03 |
| Aspherical Coefficient | A4 | 2.09140E-03 | 5.63537E-04 | 2.07059E-02 |
| | A6 | -1.63402E-03 | -4.85518E-04 | 8.83954E-03 |
| | A8 | 9.85856E-04 | 1.87718E-04 | -4.80545E-03 |
| | A10 | -3.06757E-04 | -1.46173E-04 | 3.96230E-03 |
| | A12 | 3.10621E-06 | -9.56550E-05 | -1.08595E-03 |

Fig. 10 is a graph illustrating a change in wave front aberration with respect to the tolerance in a lens interval between the first and second lenses of an objective lens unit of an optical pickup in another embodiment according to the invention. The figure shows a dependence with the horizontal axis representing the lens interval tolerance and the vertical axis representing the quantity of wave front aberration (rms (λ)) on the optical axis. As shown in this figure, the wave front aberration of the objective lens unit is limited to about the Marechal's condition 0.07 λ in a range of lens interval tolerance larger than that of the first embodiment.

Fig. 11 shows a change in wave front aberration of the objective lens unit with respect to the eccentric distance of lens. In the Figure, the horizontal axis represents the distance between both the optical axes the first and second lenses (mm), and the vertical axis represents the quantity of wave front aberration (rms (λ)). As shown in this figure, the wave front aberration of the objective lens unit is limited far below the Marechal's condition 0.07 λ, about 0.01 λ in a range of lens eccentric distance of about 0.05 mm.

Thus, since the refractive index of the aspherical surface portion is larger than that of the parallel flat portion, the second example enables to broaden the tolerance in a lens interval between the first and second lenses in the objective lens set in comparison with first embodiment in which the diameter of the preformed ball for the second lens volume including the flat portion is smaller than the paraxial curvature radius of the aspherical surface, so that the basic performance of lens such as an image height and the like is maintained and, the allowable amount of center positions of the first lens and the second lens can be widen to facilitate the design for the glass lens.

As described above, in the complex objective lens according to the invention, there can be obtained the aspherical surface glass lens having a relatively small paraxial curvature radius and a relatively fat thickness so that an objective lens with a high numeral aperture acquires a tolerance against the deviation of parts together with a high image height characteristics. Moreover, according to the invention, the aspherical surface i.e., first optical element may be formed in a thin shape to have a pertinent curvature radius, since the condenser lens at the light exit side i.e., the second lens is composed by two separate pieces i.e., the aspherical surface and the parallel flat portion. Furthermore, according to the invention, it is unnecessary to adjustment of position of the complex objective lens in an assembling process. In addition, by a pertinent selection of the thickness of the parallel flat portion i.e., the second optical element, the thickness tolerance of the aspherical surface in the complex objective lens may be widen and the life time of the metal mold for molding can be prolonged in the manufacturing processes.

It is understood that the foregoing description and accompanying drawings set forth the preferred embodiments of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

The features disclosed in the foregoing description, in the claims and / or in the accompanying drawings may, both separately and in any combination thereof, be material for realising the invention in diverse forms thereof.

## Claims

1. A complex objective lens having a convex aspherical surface shape comprising:

   a first optical element having a first surface including a convex aspherical surface shape and an opposite side surface opposing to the first surface; and
   a second optical element having an exit surface through which an optical beam passing and an entry surface opposing to the exit surface,
   wherein the opposite side surface opposing to the first surface of the first optical element and the entry surface opposing to the exit surface of the second optical element are directly contacted to each other.

2. A complex objective lens according to claim 1, wherein the first optical element has a refractive index larger than the refractive index of the second optical element.

3. A complex objective lens according to claim 1, further comprising an intermediate directly interposed on and between the opposite side surface opposing to the first surface of the first optical element and the entry surface opposing to the exit surface of the second optical element to connect the first and second optical elements.

4. A complex objective lens according to claim 3, wherein the intermediate film has a refractive index larger than the refractive index of the second optical element and the first optical element has a refractive index larger than the refractive index of the intermediate film.

5. A complex objective lens according to claim 1, wherein the convex aspherical surface shape of said first optical element includes a center curvature radius in a range of length equal to and larger than a radius of a ball having the same volume as a volume of the first optical element and smaller than a radius of a ball having the same volume as a total volume of the first and second optical elements.

6. A complex objective lens according to claim 1, wherein a center curvature radius rA of said the convex aspherical surface shape of the first optical element satisfies a formula below:

$$\sqrt[3]{\frac{3}{4\pi}V1} \leq rA < \sqrt[3]{\frac{3}{4\pi}(V1+V2)} \qquad (1)$$

   wherein V1 denotes a volume of the first optical element, and V2 denotes a volume of the second optical element.

7. A complex objective lens according to claim 1, wherein the first and second optical element are made of a glass material, the opposite side surface opposing to the first surface of the first optical element and the entry surface opposing to the exit surface of the second optical element are formed by being contacted and abraded to make close adherence to one another.

8. An optical pickup device **characterized by** comprising a complex objective lens including: a first optical element having a first surface including a convex aspherical surface shape and an opposite side surface opposing to the first surface; and

   a second optical element having an exit surface through which an optical beam passing and an entry surface opposing to the exit surface,
   wherein the opposite side surface opposing to the first surface of the first optical element and the entry surface opposing to the exit surface of the second optical element are directly contacted to each other.

9. An optical recording/reproducing apparatus **characterized by** comprising an optical pickup device having a complex objective lens including: a first optical element having a first surface including a convex aspherical surface shape and an opposite side surface opposing to the first surface; and

a second optical element having an exit surface through which an optical beam passing and an entry surface opposing to the exit surface,
wherein the opposite side surface opposing to the first surface of the first optical element and the entry surface opposing to the exit surface of the second optical element are directly contacted to each other.

**10.** A method for manufacturing a complex objective lens having a convex aspherical surface shape comprising the steps of:

providing a first optical element having a first surface including a convex aspherical surface shape and an opposite side surface opposing to the first surface, and a second optical element having an exit surface through which an optical beam passing and an entry surface opposing to the exit surface;
directly contacting and abrading said first and second optical element at the opposite side surface opposing to the first surface of the first optical element and the entry surface opposing to the exit surface of the second optical element; and
applying said second optical element to the first optical element.

**11.** A method according to claim 10, further comprising a step of monitoring a thicknesses of the first and second optical elements in the abrading step to stop to abrade the first and second optical elements at a time that a predetermined optical thickness is obtained.

**12.** A method according to claim 10, further comprising a step of providing an intermediate film between the opposite side surface opposing to the first surface of the first optical element and the entry surface opposing to the exit surface of the second optical element, after the abrading step.

FIG. 1

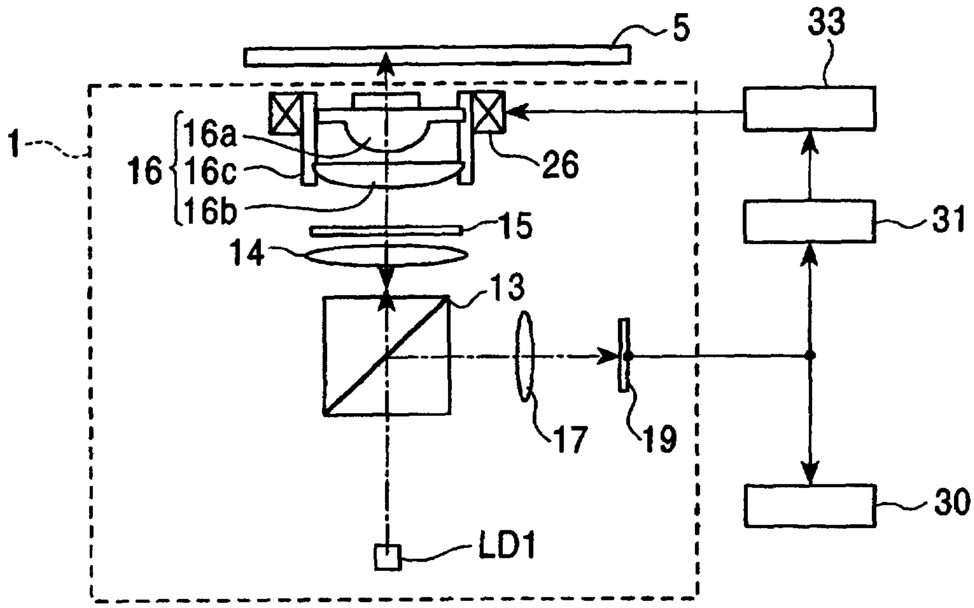
5
33
1
16a
16
16c
16b
26
15
31
14
13
17
19
30
LD1

FIG. 2

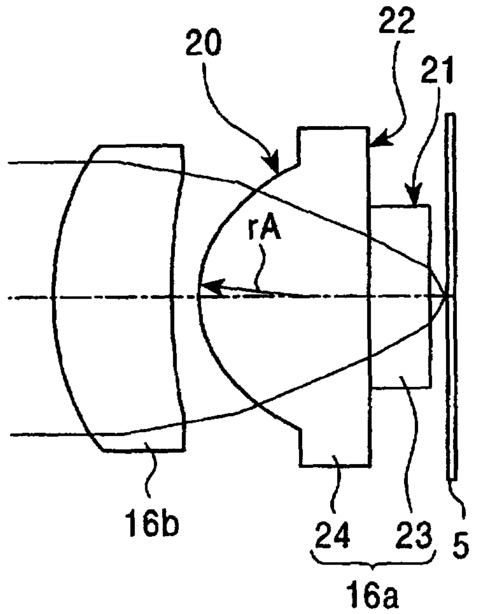
20
22
21
rA
16b
24
23
5
16a

FIG. 3

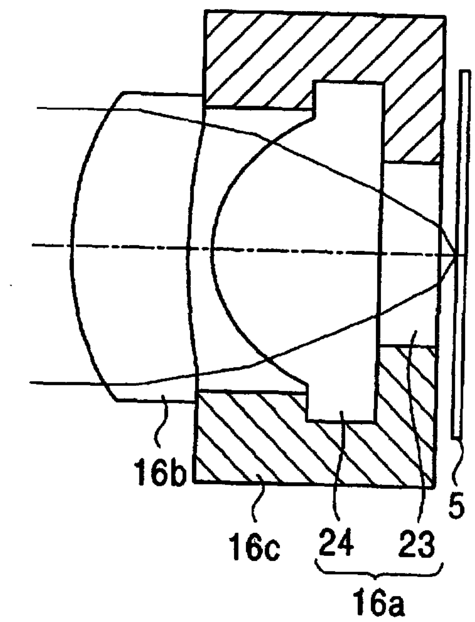


FIG. 4

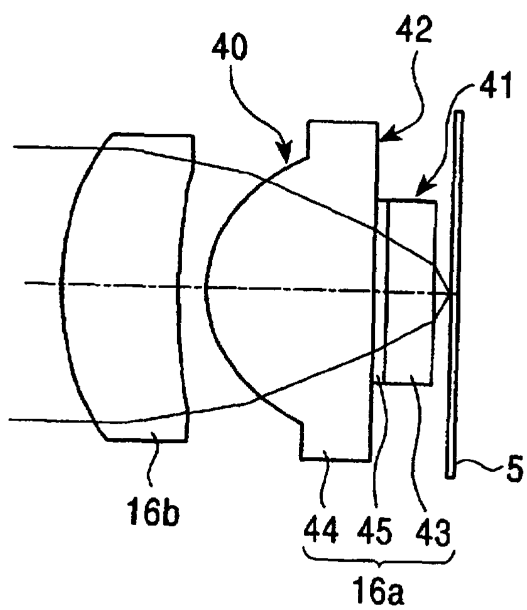

FIG. 5

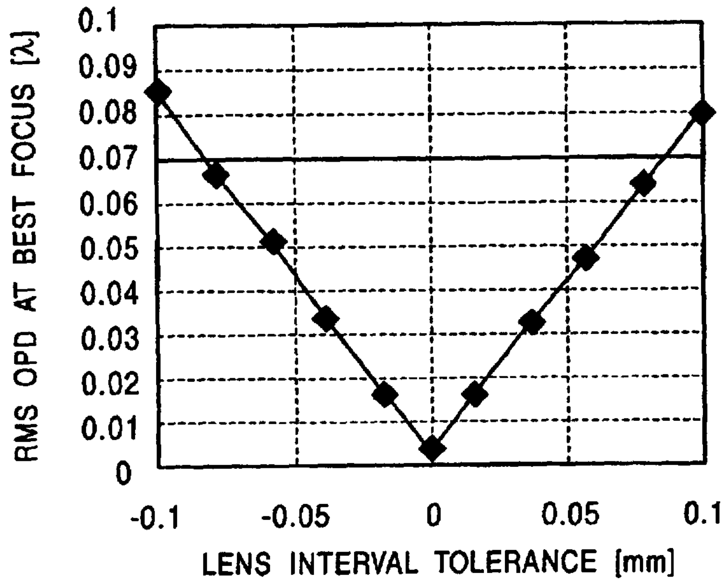
RMS OPD AT BEST FOCUS [λ]
0.1
0.09
0.08
0.07
0.06
0.05
0.04
0.03
0.02
0.01
0
-0.1
-0.05
0
0.05
0.1
LENS INTERVAL TOLERANCE [mm]

FIG. 6

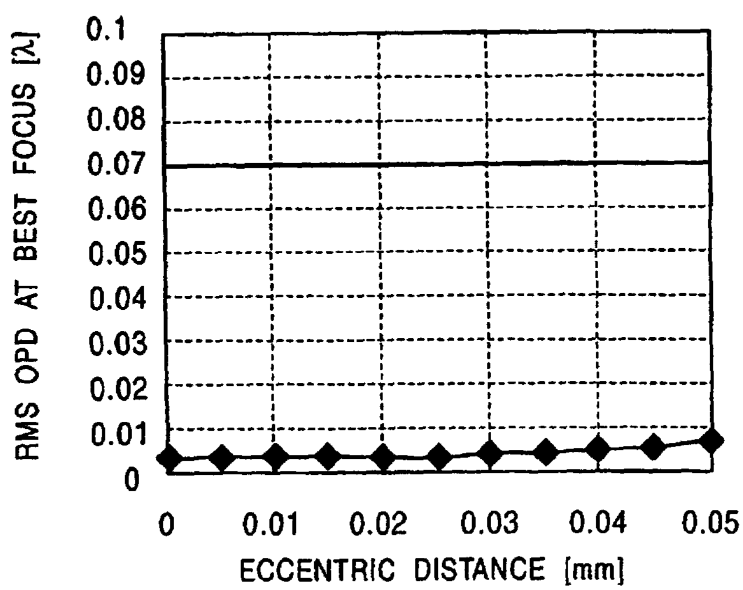
RMS OPD AT BEST FOCUS [λ]
0.1
0.09
0.08
0.07
0.06
0.05
0.04
0.03
0.02
0.01
0
0
0.01
0.02
0.03
0.04
0.05
ECCENTRIC DISTANCE [mm]

FIG. 7

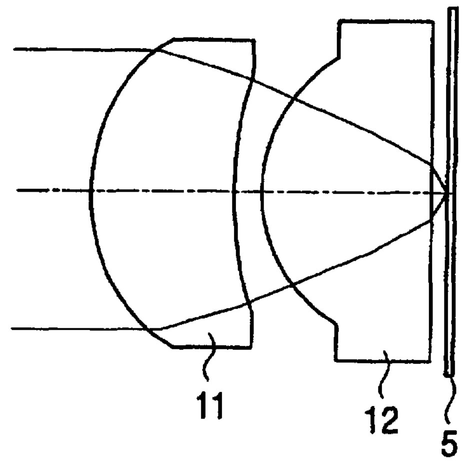
11
12
5

FIG. 8

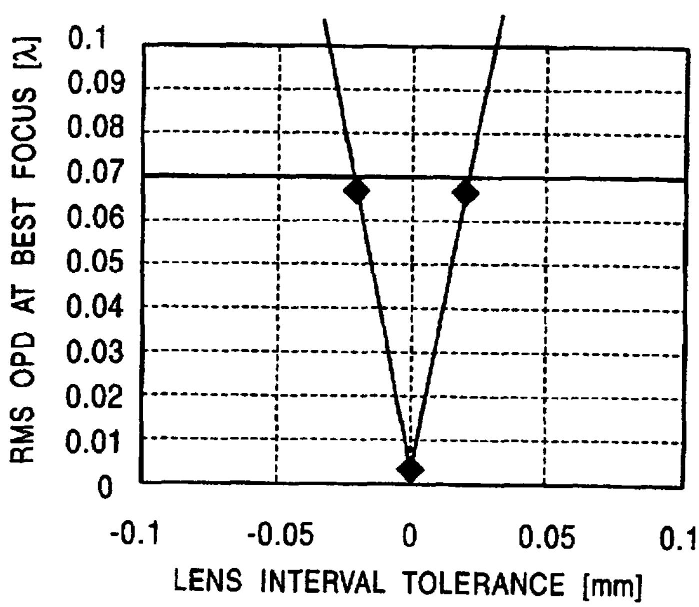
RMS OPD AT BEST FOCUS [λ]
0.1
0.09
0.08
0.07
0.06
0.05
0.04
0.03
0.02
0.01
0
-0.1
-0.05
0
0.05
0.1
LENS INTERVAL TOLERANCE [mm]

FIG. 9

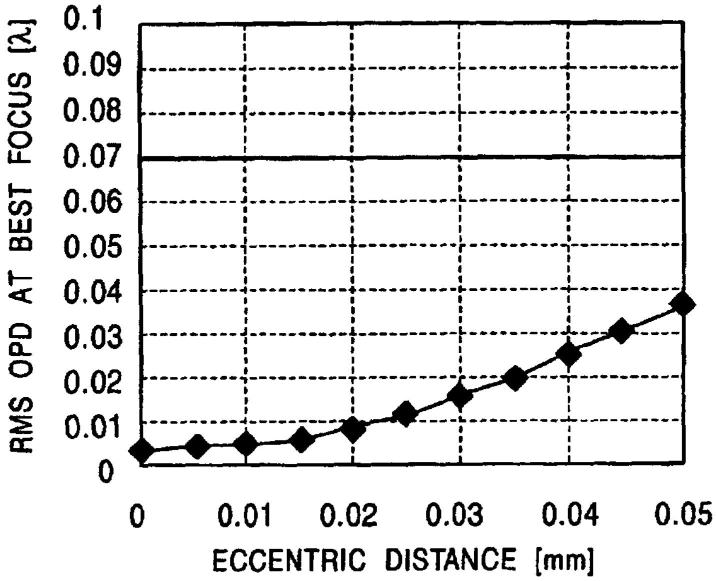
RMS OPD AT BEST FOCUS [λ]
0.1
0.09
0.08
0.07
0.06
0.05
0.04
0.03
0.02
0.01
0
0
0.01
0.02
0.03
0.04
0.05
ECCENTRIC DISTANCE [mm]

FIG. 10

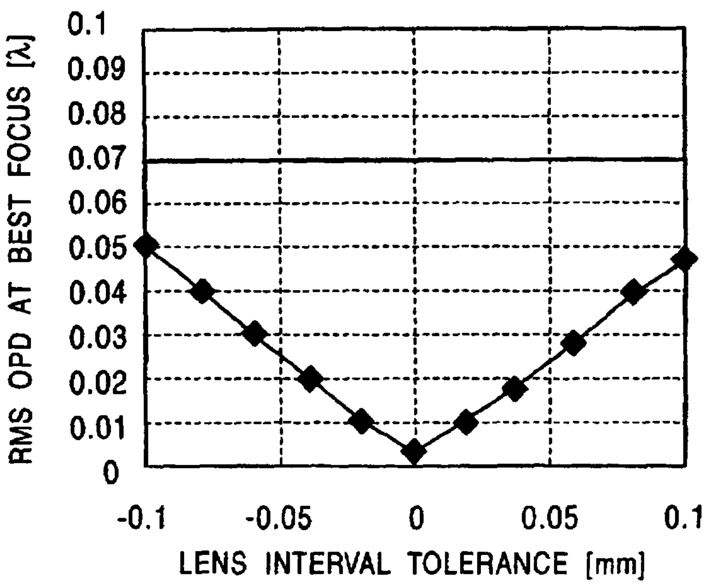
RMS OPD AT BEST FOCUS [λ]
0.1
0.09
0.08
0.07
0.06
0.05
0.04
0.03
0.02
0.01
0
-0.1
-0.05
0
0.05
0.1
LENS INTERVAL TOLERANCE [mm]

Fig. 1 1

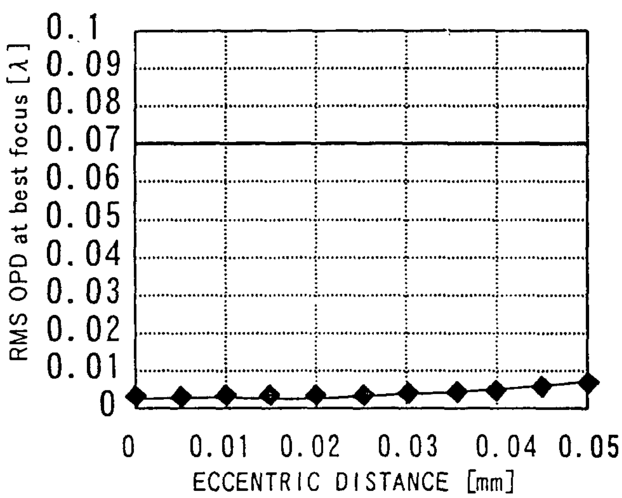
RMS OPD at best focus [λ]
0.1
0.09
0.08
0.07
0.06
0.05
0.04
0.03
0.02
0.01
0
0
0.01
0.02
0.03
0.04
0.05
ECCENTRIC DISTANCE [mm]